# EUROPEAN PATENT APPLICATION

(11) **EP 1 950 085 A2**
(43) Date of publication of application: **30.07.2008**
(21) Application number: 08150150.4
(22) Date of filing: 10.01.2008
(51) Int. Cl.: B60N 2/58

(54) **Seat apparatus for vehicle**

(30) Priority: 24.01.2007 JP 2007013978
(71) Applicant: AISIN SEIKI KABUSHIKI KAISHA, Kariya-shi, Aichi 448-8650 (JP)
(72) Inventor: Kojima, Yasuhiro, Kariya-shi Aichi 448-8650 (JP); Nihonmatsu, Hideo, Kariya-shi Aichi 448-8605 (JP); Nagura, Mikihito, Okazaki-shi Aichi 444-2121 (JP)
(74) Representative: TBK-Patent

(57) **Abstract**

A seat apparatus for a vehicle having a seat cushion (10) on which an occupant is seated, includes a pad (14) forming a seating surface, a cover (15) for covering the pad (14), a frame (13, 21, 23) positioned below the pad (14) at each side of the seat cushion (10), relative to a width direction of the seat cushion and including a main body (13a, 21a, 23 a) forming a side wall which extends in vertical and longitudinal directions relative to the seat cushion (10) and an aperture (16) formed at the main body (13a, 21a, 23a), and a retainer (17) attached to an end portion of the cover (15) and retained at a peripheral portion of the aperture (16) for fixing the cover (15) to the frame (13, 21, 23).

## Description

### FIELD OF THE INVENTION

This invention relates to a seat apparatus for a vehicle. In particular, the invention relates to a fixing structure for fixing a cover of a seat cushion to a frame.

### BACKGROUND

A known cover fixing structure of a seat for a vehicle is disclosed in JP2000-309239A. In the cover fixing structure, a cover member is provided at a skeletal frame arranged at each side of a seat cushion relative to a width direction thereof. Further, a cover hooking member, made of a steel wire, is fixed to the cover member for hooking the cover. This structure simplifies operation for hooking an end portion of the cover.

On the other hand, in a cover fixing structure of a seat for a vehicle disclosed in JP 2001-197969A, a bracket shaped bead is formed at a lower end portion of a skeletal frame of a seat cushion for hooking a cover. The bead simplifies fixation of a retainer, on which an end portion of the cover is stitched.

However, in JP2000-309239A, the fixation structure, in which the cover is hooked by the cover hooking member extending to a lower end portion of the skeletal frame, is adopted. In the structure, the cover and the like are disposed below the skeletal frame. Therefore, the structure potentially causes difficulty in preventing the interference with members in vicinity and in securing a predetermined space.
Further, an additional component (cover hooking member), exclusively used for hooking the cover, is required. For the reason, the number of the components is increased, leading to an increase in the manufacturing cost.

On the other hand, in JP2001-197969A, the fixation structure, in which the cover is fixed by fixing the retainer to the lower end portion (bead) of the skeletal frame, is adopted.
In the structure, the retainer and the like are disposed below the skeletal frame. Thus, similarly to the fixation structure disclosed in JP2000-309239A, the structure potentially causes the difficulty in preventing the interference with members in vicinity and in securing a predetermined space.

A need exists for a seat apparatus which prevents interference with members in vicinity below a skeletal frame.

### SUMMARY OF THE INVENTION

According to an aspect of the present invention, a seat apparatus for a vehicle having a seat cushion on which an occupant is seated, includes a pad forming a seating surface, a cover for covering the pad, a frame positioned below the pad at each side of the seat cushion, relative to a width direction of the seat cushion, and including a main body forming a side wall which extends in vertical and longitudinal directions relative to the seat cushion and an aperture formed at the main body, and a retainer attached to an end portion of the cover and retained at a peripheral portion of the aperture for fixing the cover to the frame.

According to the above-described structure, the retainer on which the end portion of the cover is stitched is fixed to the peripheral portion of the aperture of the frame arranged at each side relative to the width direction of the seat cushion.

In the above-described structure, in order to fix the cover, the retainer, on which the end portion of the cover is stitched, is fixed to the peripheral portion of the aperture of the frame. Thus, it is not necessary to provide an additional component, used exclusively for fixation, at a side of the frame, thus preventing the increase in the number of components. Further, the retainer is fixed so as to fit in the aperture (peripheral portion) of the frame. Hence, the retainer is not disposed below the frame, therefore avoiding the interference with members in vicinity and securing a predetermined space.

According to another aspect of the present invention, the peripheral portion of the aperture includes the inner circumference edge surface defining the aperture.

In the above-described structure, the peripheral portion is the peripheral wall defining the inner circumferential edge surface of the aperture. Accordingly, it is not necessary to change the form of the frame, thus preventing the increase in the number of man hours.

According to further aspect of the present invention, the peripheral portion is composed of the reinforcing portion integrally formed with the frame along the periphery portion of the aperture.

In the above-described structure, the reinforcing portion is integrally formed with the frame along the periphery portion of the aperture, thereby improving stiffness of the frame against flexural load.

### BRIEF DESCRIPTION OF THE DRAWINGS

The foregoing and additional features and characteristics of the present invention will become more apparent from the following detailed description considered with reference to the accompanying drawings, wherein:

Fig.1 is a side view illustrating an embodiment of the invention;

Fig.2 is a sectional view taken along line II-II of Fig. 1;

Fig.3 is a perspective view illustrating a lower arm;

Fig. 4 is a sectional view illustrating a lower arm;

Fig. 5 is a sectional view illustrating a modification of the invention; and

Fig. 6 is a sectional view illustrating a modification of the invention.

### DETAILED DESCRIPTION

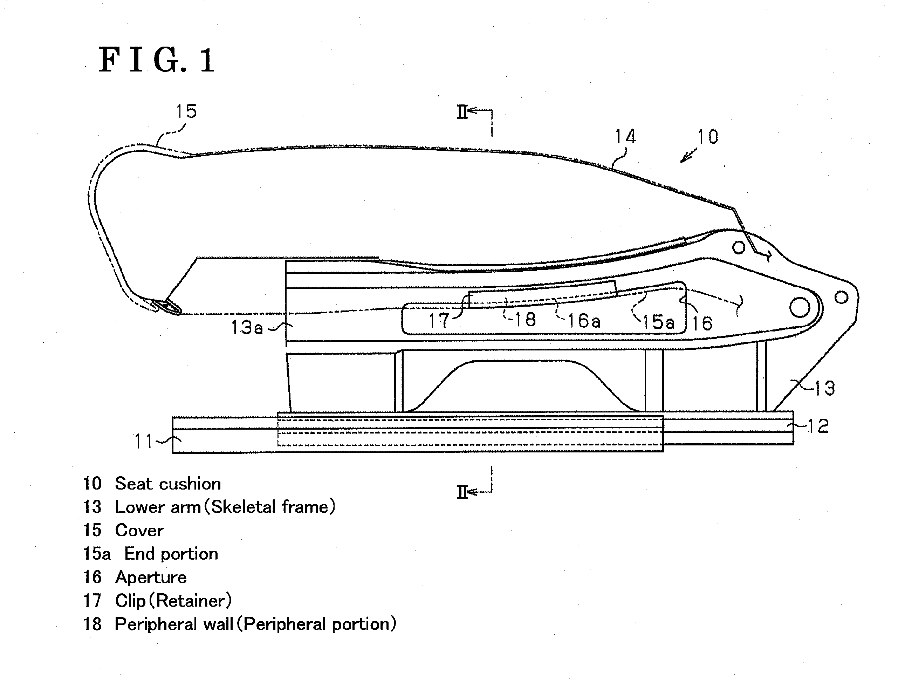

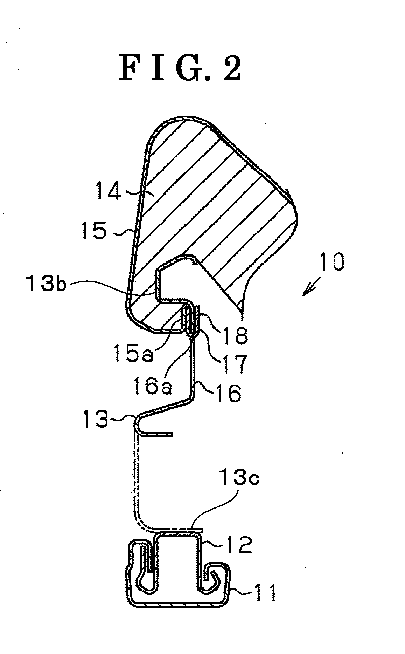

Hereinafter, an embodiment of the invention will be described with reference to drawings. Fig. 1 is a side view illustrating a seat (seat apparatus for a vehicle) mounted at a vehicle such as an automobile, on which an occupant may be seated. Fig. 2 is a sectional view taken along line II-II of Fig. 1. As illustrated in Fig. 1, a pair of lower rails 11, consisting of each lower rail 11 arranged at a side of the seat (in Fig. 1, a left side, relative to a front of the seat, is shown) relative to a width direction of the seat, is fixed so as to extend in a longitudinal direction of the vehicle with respect to a vehicle floor (not shown). Each of upper rails 12, arranged to form a pair relative to the width direction of the seat, is mounted on the corresponding lower rail 11 so as to slide in the longitudinal direction of the vehicle. Meanwhile, the longitudinal direction of the vehicle corresponds to a longitudinal direction of the seat, and further, corresponds to a longitudinal direction of a seat cushion 10, which will be described in the following section.

The lower arms 13, each supported by the corresponding upper rail 12, serve as skeletal frames, which form a pair relative to the width direction of the seat. A urethane pad 14 is supported by the lower arms 13, and a cover 15 is attached to the urethane pad 14 so as to cover an upper surface and both side surfaces thereof. The seat cushion 10 is composed of the pair of lower arms 13, the urethane pad 14, and the cover 15. The pair of lower arms 13 functions as the frame of the seat cushion 10, and the urethane pad 14 forms a seating surface of the seat cushion 10. The pair of lower arms 13 is located below the urethane pad 14. More specifically, each lower arm 13 is positioned between the upper rail 12 and the urethane pad 14. The lower arm 13 is formed by alternately bending a vertically arranged plate material inward and outward relative to the width direction of the seat, and is mainly composed of a wall 13a (main body), which forms a side wall extending in vertical and longitudinal directions of the seat, respectively. A bead portion (retaining portion) 13b is continuously formed on an upper end portion of the wall 13a and is bent so as to extend outward relative to the width direction of the seat (left side in Fig. 2). The urethane pad 14 is mounted on the bead portion 13b covering the bead portion 13b from the outward of the seat. Further, a flange portion (connecting portion) 13c is continuously formed on a lower end portion of the wall 13a and is bent so as to extend inward relative to the width direction of the seat (right side in Fig. 2). The upper rail 12 is fixed to the flange portion 13c by welding, fastening bolts or the like, thereby fixing the lower arm 13 to the upper arm 12. However, it is not necessary to fix the flange 13c to the upper rail 12 directly. The flange 13c may be fixed to the upper rail 12 via various types of links, brackets or the like.

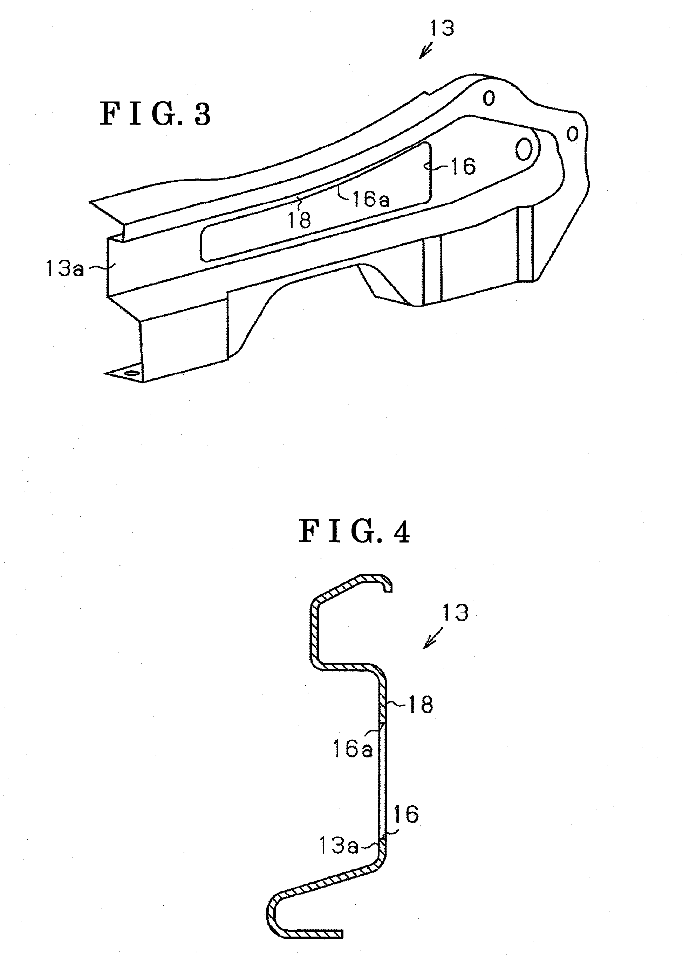

Here, the fixing structure of the cover 15 will be described. As illustrated in a perspective view of Fig. 3 and a sectional view of Fig. 4 respectively, an aperture 16 is formed on the wall 13a of the lower arm 13 and extends in the longitudinal direction of the seat. The wall 13a is bored by pressing and the like in a manner that does not affect the strength of the lower arm 13, thereby appropriately forming the aperture 16 in terms of position, number, and size. The aperture 16 is meant to reduce weights of the lower arms 13 and the seat cushion 10.

On the other hand, as shown in Fig. 2, an end portion 15a of the cover 15 covering the side surfaces of the urethane pad 14 is stitched to a clip 17 which serves as a retainer. The clip 17 is made of a resin material, and the cross section of the clip 17 is formed in a U shape. The clip 17 is fitted into a peripheral wall 18 (peripheral portion) which defines an upper side of an inner circumferential edge surface 16a of the aperture 16, and thereby fixing the cover 15 to the lower arm 17.

As described above, according to the embodiment, the following merits are obtained.
(1) In the embodiment, in order to fix the cover 15, the clip 17, on which the end portion 15a of the cover 15 is stitched, is fixed to the peripheral wall 18 of the aperture 16 of the lower arm 13. Thus, it is not necessary to provide an additional component, used exclusively for fixation, at a side of the lower arm 13, thus preventing the increase in the number of components. Further, the clip 17 is fixed so as to fit in the aperture 16 (the peripheral wall 18) of the lower arm 13. Hence, the component, the clip 17 in this case, is not disposed below the lower arm 13, therefore avoiding the interference with members in vicinity and securing a predetermined space in this configuration.

(2) In the embodiment, the peripheral wall 18 is an existing component of the lower arm 13, which defines the inner circumferential edge surface 16a of the aperture 16. Accordingly, it is not necessary to change the form of the lower arm 13, thus preventing the increase in the number of man hours.

(3) The existing aperture formed in the lower arm 13 is used as the aperture 16. Thus, forming the aperture does not affect the strength of the lower arm 13. The embodiment described above may be modified as follows.

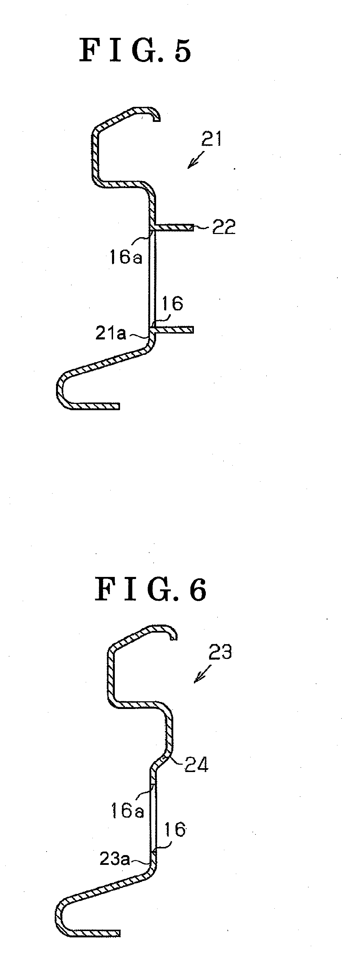

As observed in the lower arm 21 illustrated in Fig. 5, a flange (reinforcing portion) 22 may be integrally formed with the lower arm 21 by bending a wall 21a (main body) of the lower arm 21. The flange 22 extends inward, relative to the width direction of the seat, along the periphery of the aperture 16 in the wall 21a, i.e. the upper side of the inner circumferential edge surface 16a of the aperture 16. The flange 22 is easily formed when forming the aperture 16 by a processing such as pressing (cutting processing). In this case, the cover 15 is fixed to the lower arm 21 by clipping the flange 22 with the clip 17. This modification provides another merit in addition to merit (1) and (3) according to the first embodiment.
That is, the flange 22 is integrally formed with the lower arm 21 along the periphery of the aperture 16, thereby improving stiffness of the lower arm 21 against flexural load.

Alternatively, as observed in the lower arm 23 shown in Fig. 6, a bead (reinforcing portion) 24 may be integrally formed with the lower arm 23 by bending a wall 23a (main body) of the lower arm 23. The bead 24 is curved inward, relative to the width direction of the seat, along the periphery of the aperture 16 in the wall 23a, i.e. the upper side of the inner circumferential edge surface 16a of the aperture 16. The bead 24 may be formed easily when forming the aperture 16 by the processing such as the pressing. In this case, the end portion 15a of the cover 15 is stitched on a hook shaped retainer, which is made of resin, for example. Thus, the cover 15 is easily fixed to the lower arm 23 by attaching the hook shaped retainer to the portion covering from the inner circumferential edge surface of the aperture 16 to the bead 24. This modification provides another merit in addition to merit (1) and (3) according to the first embodiment. That is, the bead 24 is integrally formed with the lower arm 23 along the periphery of the aperture 16, thereby improving stiffness of the lower arm 23 against the flexural load.

In the retainer such as the clip 17, the main portion thereof should be formed with metal such as stainless steel or rigid plastic. However, in this type of retainer, a stitched portion on which the end portion 15a is stitched should be formed by a flexible plastic. A seat apparatus for a vehicle having a seat cushion (10) on which an occupant is seated, includes a pad (14) forming a seating surface, a cover (15) for covering the pad (14), a frame (13, 21, 23) positioned below the pad (14) at each side of the seat cushion (10), relative to a width direction of the seat cushion and including a main body (13a, 21a, 23a) forming a side wall which extends in vertical and longitudinal directions relative to the seat cushion (10) and an aperture (16) formed at the main body (13a, 21a, 23a), and a retainer (17) attached to an end portion of the cover (15) and retained at a peripheral portion of the aperture (16) for fixing the cover (15) to the frame (13, 21, 23).

## Claims

1. A seat apparatus for a vehicle having a seat cushion (10) on which an occupant is seated, comprising:
a pad (14) forming a seating surface;
a cover (15) for covering the pad (14);
a frame (13, 21, 23) positioned below the pad (14) at each side of the seat cushion (10), relative to a width direction of the seat cushion (10), the frame (13, 21, 23) including a main body (13a, 21a, 23a) forming a side wall which extends in vertical and longitudinal directions relative to the seat cushion (10) and an aperture (16) formed at the main body (13a, 21a, 23a); and
a retainer (17) attached to an end portion of the cover (15) and retained at a peripheral portion of the aperture (16) for fixing the cover (15) to the frame (13, 21, 23).

2. A seat apparatus according to Claim 1, wherein the peripheral portion of the aperture (16) includes an inner circumferential edge surface defining the aperture (16).

3. A seat apparatus according to Claim 2, wherein the frame (21, 23) has a reinforcing portion (22, 24) formed by bending the main body (21a, 23a), and the reinforcing portion (22, 24) extends inward, relative to the width direction of the seat apparatus, along the inner circumferential edge surface of the aperture (16).

4. A seat apparatus according to Claim 1, wherein a retaining portion (13b) is integrally formed with the frame (13) by bending a continuous area from an upper end portion of the main body (13a), and wherein the pad (14) is mounted on the retaining portion (13b).

5. A seat apparatus according to Claim 1, further comprising:
a lower rail (11) adapted to be mounted on a vehicle floor; and
an upper rail (12) supported by the lower rail (11) so as to slide in the longitudinal direction of the seat cushion (10), wherein a connecting portion (13c) is integrally formed with the frame (13) by bending a continuous area from a lower end portion of the main body (13a), and the connecting portion (13c) is connected to the upper rail (12).
